# EUROPEAN PATENT APPLICATION

(11) **EP 4 618 590 A1**
(43) Date of publication of application: **17.09.2025**
(21) Application number: 25163400.2
(22) Date of filing: 13.03.2025
(51) Int. Cl.: H04R 1/10

(54) **IN-LINE CONTROLLER FOR AN AUDIO DEVICE**

(30) Priority: 13.03.2024 EP 24163300
(71) Applicant: EPOS Group A/S, 2750 Ballerup (DK)
(72) Inventor: FERRANTI, Giovanni, DK-2750 Ballerup (DK); STAGE, Jacob, DK-2750 Ballerup (DK)
(74) Representative: Demant

(57) **Abstract**

There is inter alia disclosed an in-line controller for an audio device, the in-line controller comprising: an elongated housing having a first end and a second end, wherein the first end and the second end receive electrical wiring; wherein the housing comprises a first longitudinal section with a circumferential volume control wheel rotatable relative to the rest of the housing around a longitudinal axis of the housing, wherein the volume control wheel is configured to be rotated limitlessly; wherein the housing houses an encoder configured for providing a signal representative of position information of the volume control wheel.

## Description

### Field of the disclosure

The present disclosure inter alia relates to in-line controllers and in particular to in-line controllers for an audio device, such as an in-line controller for a wired headset. The present disclosure further relates to a wired headset having an in-line controller.

### Background

In-line controllers for headsets are supposed to let the user effortlessly change the volume and perform other options in an intuitive manner. However, in present solutions the user interaction may not be optimal, as the user may not easily identify the buttons to be pressed, may need to look at the user interface in order to perform the desired actions and/or may accidently perform undesired actions. In particular, the user regularly desires to operate the in-line controller single-handedly, which may also be difficult. Moreover, in-line controllers are required to have a compact design to not be too heavy or considered disturbing by the user.

US 2019/342650 discloses a control device for a headset audio system and a headset audio system with a control device. The headset is configured to provide output audio to a user. The control device is configured for connection with the headset. The control device comprises a cylindrical connector section for connection to an audio output socket of an audio unit; the connector section having a longitudinal axis and a control section, which is mounted to the connector section. The control section comprises at least a volume control for the output audio. The control device is configured to, during use, mechanically lock with the audio unit, so that the control device maintains a fixed angular position with respect to the audio unit around the longitudinal axis.

US 2009/147971 discloses an ear phone that features two transducer housings and a flexible head strap. The head strap is pre-shaped in such a way that it is coiled up and has at least one turn in its relaxed and unworn state. In this way, the phone can be stowed in a space-saving fashion when it is not worn.

Therefore, there is a need to provide a solution that addresses at least some of the above-mentioned problems and, in particular, to provide a solution that allows for a an easy to operate in-line controller having a compact, ergonomic design. The present disclosure provides at least an alternative to the prior art.

### Summary of example embodiments

According to an aspect of the disclosure, there is disclosed an in-line controller for an audio device. The in-line controller may comprise an elongated housing. The housing may have a first end and a second end. The first end and the second end may receive electrical wiring. The housing may comprise a first longitudinal section with a circumferential volume control wheel. The volume control wheel may be rotatable relative to the rest of the housing around a longitudinal axis of the housing. The volume control wheel may be configured to be rotated limitlessly. The housing may house an encoder configured for providing a signal representative of position information of the volume control wheel.

According to a further aspect of the disclosure, there is disclosed an audio device having a wired connection to an audio source. The audio source may be a base station connecting to a phone system or the like, such as connecting to a soft phone. Thereby the audio device may operate as a wired headset for a conversation between a user of a softphone, or other type of communication including land line or mobile phone, and a remote talker. The audio device may include a controller arranged in the wire, and the controller may be of the in-line controller as described herein.

In a wired headset according to the present disclosure, the wire could comprise two parts or sections, wherein the in-line controller could be arranged so that a first part of a wire connects the in-line controller to the wired headset, possibly via a detachable connector so that the wire could be disconnected from the headset or as a wire part permanently connected to the headset/earcup, and a second part of the wire connects the in-line controller to a plug. The plug could then plug in to a base station and/or computer and/or landline phone.

In another aspect, a method for operating an in-line controller of an audio device is disclosed. The method may comprise setting a current volume of the audio device to a reference volume. The method may further comprise receiving a signal representative of position information of a volume control wheel of the in-line controller, the volume control wheel being configured to be rotated limitlessly by a user of the audio device. The method may further comprise setting a new volume of the audio device based on the current volume and the received signal representative of position information of the volume control wheel.

The aspects allow for a compact ergonomic in-line controller with an integrated volume wheel that can turn freely 360 degrees (and beyond) in either direction, with low friction. The in-line controller can allow single handed easy operation without having to look at the controller.

The disclosed devices (such as the in-line controller and/or the audio device) may in particular be configured to perform the method steps of the disclosed method. Likewise, the disclosed method may be performed by the disclosed devices (such as the in-line controller and/or the audio device) the in-line controller.

Furthermore, a computer program product is also disclosed, the computer program product when executed by a processor of a device (e.g., an in-line controller or an audio device) causing said device to perform a method according to any example aspect.

In certain aspects the disclosed volume control wheel may be incorporated in different parts of the audio device or even in other devices than an audio device. For instance, in one example, the audio device may be a headset or a headphone. Accordingly, in one example, the in-line controller may be an in-line controller for a headset. For instance, in one example, the in-line controller may be an in-line controller for a headphone. For instance, according to an example there may be disclosed a headset with a headset boom arm. The headset boom arm may comprise a section with the circumferential volume control wheel and may also house the encoder, as described.

The volume to be controlled by the volume control wheel may e.g. pertain to an input or output volume. In another aspect, the disclosed volume control wheel may also be used for controlling other parameters than the volume.

The audio device may for instance be or comprise headphone(s), e.g. in-ear headphone(s), on-ear headphone(s) or over-ear headphone(s). In case of a headset, the audio device may further comprise a microphone or microphone system. The wiring received by the first end may connect the housing with the headphones of the audio device. The wiring received by the second end may connect the housing with a connector, such as a USB type connector or phone jack, which may be connected to an audio source device (such as a computer, laptop, tablet, smartphone, audio device etc.) providing an audio source signal to be output by the audio device. The wiring may be connected to the first and/or second end of the housing via a strain relief mechanism.

The electrical wiring may generally be configured to transmit digital or analog audio signals or data from the connector via the in-line controller to headphones of the audio device. As will be explained in more detail below, the electrical wiring may for instance be connected to a circuit board at the first and the second end. 1. Accordingly, the in-line controller may be integrated into the wiring of a wired audio device (such as a wired headset).

The elongated housing may for instance be substantially tubular. At least the section with the volume control wheel may be tubular. For instance, the housing may have a length of less than 80mm, preferably less than 70mm. The housing may have a length of around 60mm. The diameter of the housing may in particular be less than 12mm, in particular less than 11mm. The housing may have a diameter of around 10mm.

The housing may comprise a first longitudinal section with a circumferential volume control wheel. The first section may for instance be located at or extend to an end (e.g. the first end) of the housing. The length of the first section may for instance be less than half and in particular less than a quarter of the length of the housing. As will be explained in more detail below, the housing may comprise further sections. For instance, the housing may comprise a (second) section with further user interface elements. The volume control wheel may be hollow and substantially tubular. For instance, the volume control wheel may have a structured surface (such as grooves), which may facilitate identifying and turning the volume control wheel by the user. The volume control wheel may provide the outer circumference for the first section. The volume control wheel may be rotatable relative to the rest of the housing, e.g. relative to further longitudinal sections of the housing and/or relative to first and/or second face plates of the housing provided at respective ends.

The volume control wheel may be configured to be rotated limitlessly. In other words, there is no end stop provided which would limit rotation of the volume control wheel at any point. Rather, the volume control wheel may be configured to be rotated freely and indefinite by the user in both directions. However, a certain amount of friction is provided between the volume control wheel and the rest of the housing to avoid unintentional rotation of the volume control wheel. As will also be explained in more detail below, the approach of the present disclosure allows the actual value of the volume to be set or determined by software or hardware based on a relative positioning of the volume control wheel (e.g. relative to the position of the volume control wheel at the time when it was plugged in, switched on or woken up), e.g. by a software or hardware component integrated into the housing or into the audio device, such as the headphones.

The housing may house an encoder or sensor configured for providing a signal representative of (angular) position information of the volume control wheel. Accordingly, the method may comprise receiving a signal representative of position information of a volume control wheel of the in-line controller. A signal representative of position information may be understood broadly. Thus, the encoder may provide a signal representative of e.g. a relative position, an absolute position or a change in position of the volume control wheel. Thus, the signal representative of a position of the volume control wheel may not necessarily indicate an absolute position of the volume control wheel, but may also represent a relative position or change in position. As already mentioned above and described in more detail below, the approach described herein does not require knowledge of an absolute position of the volume control wheel, because a reference position (e.g. the current position of the volume control wheel when activating, switching on or plugging in the audio device) may be used or set by software or hardware and the volume may then be changed by the user via the volume control wheel relative to this reference position.

The volume may refer to the volume of an audio signal transmitted from an audio source device over the in-line controller to earphone(s) of the audio device. Alternatively, the volume may also pertain to a volume of a microphone (i.e. the gain set for the microphone) of the audio device.

The encoder may be or may comprise one or more of:
- a rotary encoder;
- a linear encoder;
- an incremental encoder;
- an absolute encoder;
- an optical encoder;
- a magnetic encoder;
- a mechanical encoder;
- an electro-mechanical encoder; and/or
- a piezoelectric encoder.

A rotary or angular magnetic encoder has been found to be particularly advantageous, as it can be realized in a compact manner with low costs and the required level of precision. Nevertheless, likewise optical encoders and mechanical switches may be used any may be advantageous for certain use cases. For instance, optical encoders may have the advantage of being able to provide an absolute position of the volume control wheel. For instance, a mechanical encoder (e.g. switches or buttons) may have the advantage of allowing cost sensitive solution. Also, multiple encoders of the same or different types may be provided, which may in particular increase the accuracy of the position information. Various example embodiments employing different encoders and combinations will be provided further below.

The method may comprise setting a new current volume of the audio device based on the current volume and the received signal representative of position information of the volume control wheel. Accordingly, the in-line controller may be configured to set a new volume of the audio device based on a current volume of the audio device and the signal representative of position information of the volume control wheel received from the encoder.

Setting the current volume may be understood to mean to either adapt an audio signal so as to change the volume of the signal or to send a control signal indicating the volume to be set so that the audio signal is then changed e.g. by another module or component of the audio device or by another device (such as the device providing the audio signal to be output).

The method may comprise setting a current volume of the audio device to a reference volume. Accordingly, e.g. when the audio device is woken up, switched on and/or plugged in, the in-line controller may be configured to set a current volume of the audio device to a reference volume.

As indicated above, setting the volume to a reference volume by the in-line controller may be realized by adapting an audio signal or by sending a respective control signal to the headphones or to a device providing the source audio. The reference volume may be or may be based on a predetermined or fixed volume, such as a volume which is considered to be a safe volume (i.e. low enough to not cause any harm to a human's hearing). Alternatively, the reference volume may be or may be based on a volume of the audio device at the time of hibernating, switching off or plugging out the audio device. This (predetermined or last known) volume may then be the reference volume which is thereby assigned to the current reference position of the volume control wheel, when the audio device is woken up, switched on and/or plugged in. The volume can then be adapted based on a rotation of the volume control wheel by the user relative to this reference position.

In a preferred example, a ring magnet is fixed to the volume control wheel. Accordingly, the encoder may be a magnetic (rotational or angular) encoder for encoding the magnetic field of the ring magnet for providing the signal representative of position information of the volume control wheel. The magnetic encoder may be or employ a hall sensor. Due to the changing magnetic field upon rotation of the volume control wheel, the encoder may recognize a change in the magnetic field and thus the change in position of the volume control wheel.

The ring magnet may be magnetized through or along the circumference of the ring magnet. For instance, the ring magnet may be magnetized with magnetic north on one semi-circular segment and with magnetic south on the other semi-circular segment. Accordingly, the ring magnet may be diametrically magnetized, i.e. magnetic north and south lying on opposite sides of the ring magnet. While the ring magnet may in the simplest example be a dipole, further magnetic configuration may be conceivable, such as a quadrupole (with four alternating polarized arch segments) or generally a multipole magnet (e.g. with an even higher pole count, such as 6, 8 or higher). Additionally or alternatively, the ring magnet may be magnetized in the radial direction (magnetic north on the inside or outside). Additionally or alternatively, the ring magnet may be magnetized along the thickness (magnetic north and south on respective side faces).

At least a part of electrical wiring received by the first end of the housing runs though the volume control wheel and in particular through the ring magnet. At least a part of the electrical wiring may for instance be guided through the volume control wheel (and the ring magnet) and connected to a circuit board located within the housing. At least a part of electrical wiring received by the second end of the housing may also be connected to the circuit board located within the housing.

The magnetic encoder may be located (at least partially) within the ring magnet in the longitudinal direction, which may allow a precise measurement of position information. It has been found that the encoder, such as the described magnetic rotary encoder, may alternatively be located outside the ring magnet in the longitudinal direction (i.e. in a longitudinal sectional view), which may provide more room for other components in or feeding the wiring through the volume control wheel.

The encoder may be located on the longitudinal axis of the housing, which may allow a precise measurement of position information. Alternatively, the encoder may be located offset the longitudinal axis of the housing. It has been found that the encoder does not necessarily need to be located on the longitudinal axis., i.e. in the center of the housing in a cross sectional view. Even encoders such as the described magnetic rotary encoder may be positioned offset the longitudinal axis. This may facilitate running the wiring through volume control wheel and e.g. connecting it to a circuit board.

The encoder may be a rotary encoder offset the longitudinal axis and in contact with an inside of the volume control wheel. The rotary encoder may comprise a rotatable wheel which may be in contact with the volume control wheel. A rotation of the volume control wheel causes a rotation of the wheel of the rotary encoder.

The encoder may be located on or offset the longitudinal axis of the housing.

The in-line controller may further comprise a circuit board within the housing. The electrical wiring may be received by the first end and may be connected to the circuit board and the electrical wiring may be received by the second end and may be connected to the circuit board. The encoder may be provided on the circuit board.

The second longitudinal section may comprise one or more user interface elements, in particular one or more buttons. The one or more buttons may be associated with one or more functions related to the function of a headset, such as call acceptance or rejection or call ending, or other user interactions.

The first longitudinal section may extend to the first end of the housing and the second longitudinal section may extend to the second end of the housing.

The encoder may be a mechanical encoder interacting with a cam structure comprising one or more cams on an inside of the volume control wheel. For instance, the cam structure may comprise staggered bumps or peaks for actuating the mechanical encoder.

For instance, the mechanical encoder is or comprises one or more of:
- one or more switches;
- one or more rocker switches;
- one or more push buttons; or
- a rotary encoder.

The one or more cams of the cam structure may be configured for actuating at least one linear slider configured for interacting with the mechanical encoder. The linear slider may also be considered an arm or lever. The mechanical encoder may be activated indirectly over the linear slider. The at least one linear slider may run along a longitudinal direction of the housing. For instance, the cam structure may move the one or more linear sliders back and forth in a longitudinal direction and the linear slider may activate the mechanical encoder.

The encoder may be or may comprise an optical encoder comprising an encoder structure or graphics on the inside of the volume control wheel and one or more sensors for detecting said encoder structure or graphics. The encoder structure or graphics may be provided on an inner surface of the volume control wheel so as to be seen in the radial direction of the volume control wheel. The encoder graphics may be provided on an inner surface so as to be seen in the longitudinal direction, e.g. provided on a radial projection of the volume control wheel. The encoder structure or graphics may allow not only allow for detecting a relative position or change in position of the volume control wheel, but also for a determination of an absolute position of the volume control wheel. One or more light sources may be provided for illuminating the encoder graphics.

The in-line controller may further comprise a circuit board, e.g. a printed circuit board (PCB), within the housing. The circuit board may in particular be housed at least in a second longitudinal section (as e.g. further described below) of the housing. The circuit board may, for instance, extend into the first section with the circumferential volume control wheel. The circuit board may be of substantially planar design. The circuit board may have an elongated shape and may extend along the longitudinal direction of the housing. The circuit board may in particular be substantially centered in a cross-sectional view. The circuit board may however also comprise more complex geometries.

The electrical wiring received by the first end may be connected to the circuit board. The electrical wiring received by the second end may connected to the circuit board. Furthermore, the encoder may be provided on the circuit board. For instance, the encoder may be located on the circuit board located in the first section and/or close to the first end of the housing. This may allow to position the encoder close to the volume control wheel. However, the encoder may also be positioned in the second section and/or close to the second end of the housing. In that case it may in particular be advantageous when a linear slider is provided which is configured for interacting with the distanced (mechanical) encoder.

The housing may comprise a second longitudinal section adjacent to the first longitudinal section. The second section may for instance be located at or extend to an end (e.g. the second end) of the housing. The length of the second section may for instance larger than that of the first section. The length of the second section may for instance be more than half of the length of the housing.

The second longitudinal section may comprise one or more user interface elements, in particular one or more buttons. For instance, the second section may comprise a mute button, a hook button, an accept call button, a decline call button, and/or an application specific button (such as a button for a videoconferencing software).

The outside of the first longitudinal section may be substantially flush with the outside of the second longitudinal section. In other words, the first longitudinal section with the volume control wheel may have substantially the same outer diameter as the second longitudinal section. The first longitudinal section and/or the second longitudinal section may be substantially tubular. The first longitudinal section may extend to the first end of the housing and the second longitudinal section may extend to the second end of the housing.

### Brief description of the figures

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
- FIG. 1A: schematically shows a perspective view of an example in-line controller 100;
- FIG. 1B: schematically shows a side view of the in-line controller 100 in a longitudinal section;
- FIG. 1C: schematically shows an enlarged cross-sectional view of the volume control wheel of the in-line controller 100;
- FIG. 2A: schematically shows a perspective view of an example in-line controller 200;
- FIG. 2B: schematically shows a partly transparent perspective view of the in-line controller 200;
- FIG. 2C: schematically shows an enlarged, partly transparent view of the in-line controller 200;
- FIG. 3: schematically shows a top view of an example in-line controller 300 in a longitudinal section;
- FIG. 4: schematically shows a top view of an example in-line controller 400 in a longitudinal section;
- FIG. 5: schematically shows a top view of an example in-line controller 500 in a longitudinal section;
- FIG. 6: schematically shows a top view of an example in-line controller 600 in a longitudinal section;
- FIG. 7: schematically shows a top view of an example in-line controller 700 in a longitudinal section;
- FIG. 8: schematically shows a top view of an example in-line controller 800 in a longitudinal section;
- FIG. 9: schematically shows a top view of an example in-line controller 900 in a longitudinal section; and
- FIG. 10: schematically shows a top view of an example in-line controller 1000 in a longitudinal section;

### Detailed description of Figures

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include micro-electronic-mechanical systems (MEMS), integrated circuits (e.g. application specific), microprocessors, microcontrollers, digital signal processors (DSPs), field programmable gate arrays (FPGAs), programmable logic devices (PLDs), gated logic, discrete hardware circuits, printed circuit boards (PCB) (e.g. flexible PCBs), and other suitable hardware configured to perform the various functionality described throughout this disclosure, e.g. sensors, e.g. for sensing and/or registering physical properties of the environment, the device, the user, etc. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

As a general note, in the following, the same components of different embodiments will be denoted with the same reference numerals but with different leading digits corresponding to the respective Figure.

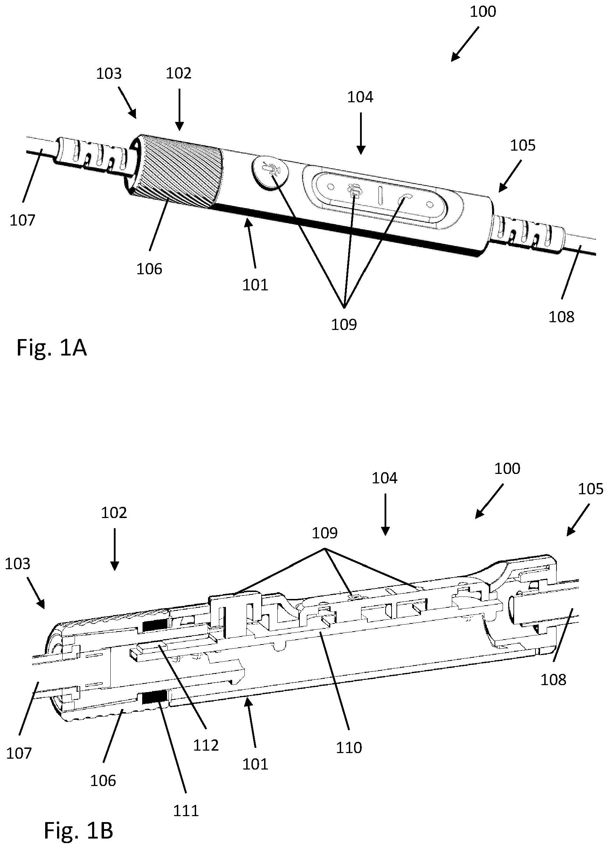

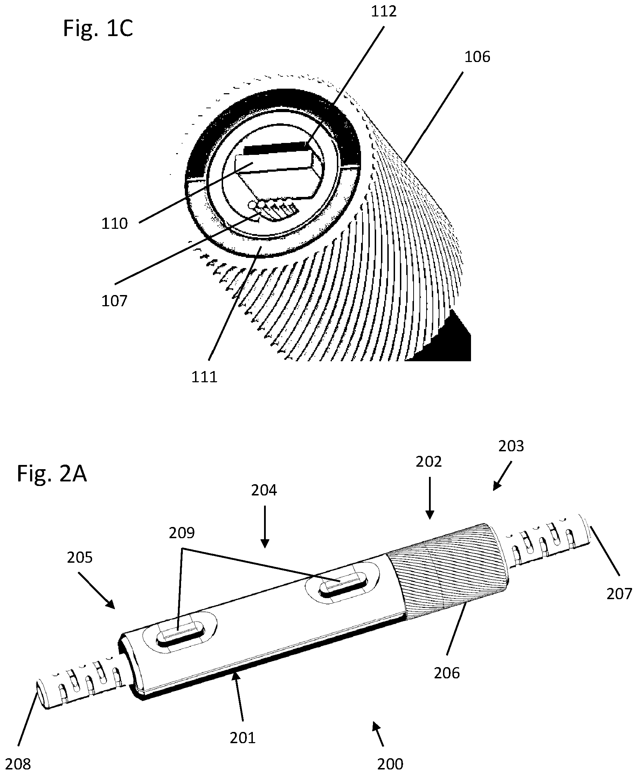

FIG. 1A, 1B and 1C illustrate a first embodiment of an in-line controller 100. More specifically FIG. 1 schematically shows a perspective view, FIG. 1B a side view of the in-line controller 100, while FIG. 1C schematically shows an enlarged cross-sectional view of the volume control wheel. The embodiment of in-line controller 100 will now be described together with reference to FIG. 1A-C.

The in-line controller 100 may be part of an audio device (not illustrated), which may be a headset, for instance. The in-line controller 100 comprises an elongated housing 101 having a first end 103 and a second end 105. The first end 103 and the second end 105 each receive electrical wiring 107, 108. The housing 101 comprises a first longitudinal section 102 and an adjacent second longitudinal section 104. The first longitudinal section 102 extends to the first end 103 of the housing 101 and the second longitudinal section 104 extends to the second end 105 of the housing 101. The in-line controller 100 further comprises a circuit board 110 within the housing 101. The electrical wiring 107, 108 is received by the first and second ends 103, 105 is connected to the circuit board 110.

The second longitudinal section 104 comprises multiple user interface elements 109, in this case buttons for functions such as mute or hook.

The first longitudinal section 102 has a user interface in the form of a circumferential volume control wheel 106, which is rotatable relative to the rest of the housing 101 around a longitudinal axis of the housing 101. The volume control wheel 106 is configured to be rotated limitlessly by a user of the audio device. For determining a relative position or change in position of the volume control wheel 106, a dipole ring magnet 111, which is polarized along its circumference so that it is diametrically polarized, is affixed to the inside of the volume control wheel 106. The housing 101 houses an encoder 112 on the circuit board 110. The encoder 112 is in this case a magnetic rotary or angular encoder for encoding the magnetic field of the ring magnet 111 and thus configured for providing a signal representative of a relative position or change in position of the ring magnet 111 and thus of the volume control wheel 106.

The encoder 112 is in this embodiment located within the ring magnet 111. However, the encoder may also be located outside the ring magnet 111 in the longitudinal direction. Further, in this embodiment, the encoder 112 is located slightly offset the longitudinal axis of the housing 101. Moreover, the electrical wiring 107 received by the first end 103 of the housing 101 can advantageously run though the volume control wheel 106 and in particular through the ring magnet 111.

The in-line controller 101 is configured to set a new volume of the audio device based on a current volume of the audio device and the signal representative of position information of the volume control wheel 106 received from the encoder 112. If the volume control wheel 106 is turned in one direction the volume is increased, if the volume control wheel 106 is turned in the other direction, the volume is decreased. Since there are no stops for the volume control wheel 106, the volume control wheel 106 can be rotated indefinitely and there no absolute position defining a specific volume. Accordingly, when the audio device is woken up, switched on and/or plugged in, the in-line controller 100 may set a current volume of the audio device to a reference volume, which may be a predetermined or fixed volume or which may be volume of the audio device at the time of hibernating, switching off or plugging out the audio device.

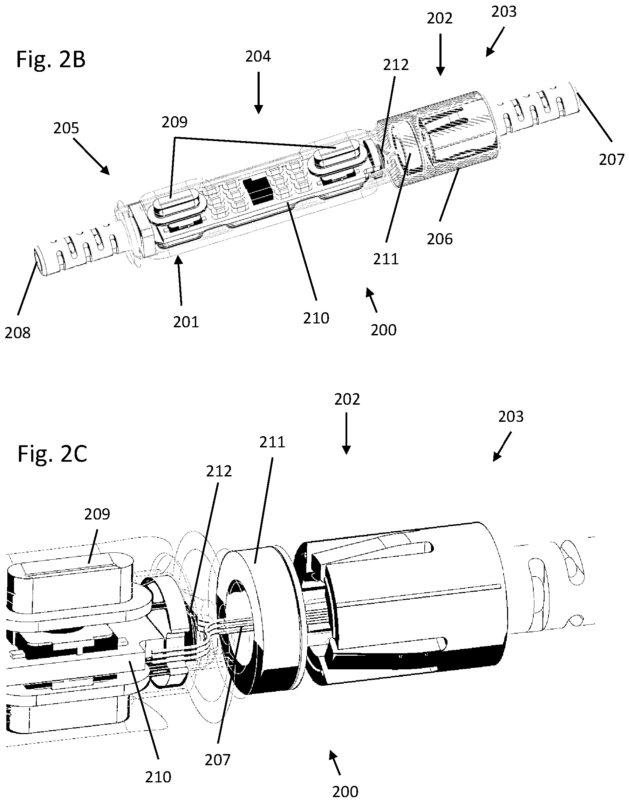

FIG. 2A, 2B and 2C illustrate another embodiment of an in-line controller 200. More specifically, FIG. 2A schematically shows a perspective view of an example in-line controller 200, while FIG. 2B and 2C show partly transparent perspective views.

Generally, the in-line controller 200 is similar to the in-line controller 100 and it can first be referred to FIG. 1A-C. Thus, similarly to the in-line controller 100, the in-line controller 200 may also be part of an audio device, such as a headset, and comprises an elongated housing 201 having a first end 203 and a second end 205, each receiving electrical wiring 207, 208. The housing 201 comprises a first longitudinal section 202 extending to the first end 203 and an adjacent second longitudinal section 204 extending to the second end 205. The in-line controller 200 also comprises a circuit board 210 within the housing 201. The electrical wiring 207, 208 is connected to the circuit board 210. The second longitudinal section 204 of the in-line controller 200 also comprises multiple user interface elements 209. The circumferential volume control wheel 206 is rotatable relative to the rest of the housing 201 around a longitudinal axis of the housing 201. The volume control wheel 206 is configured to be rotated limitlessly by a user of the audio device. For determining a relative position or change in position of the volume control wheel 206, the in-line controller 200 also comprises a dipole ring magnet 211 affixed to the inside of the volume control wheel 206.

The encoder 212 is again magnetic rotary or angular encoder for encoding the magnetic field of the ring magnet 211 for providing a signal representative of a relative position or change in position of the volume control wheel 206.

In contrast to the in-line controller 100, the encoder 212 is mounted on the circuit board 210 outside or offset the ring magnet 211 in the longitudinal direction (i.e. further away from the first end 203 than the ring magnet 211). Moreover, the circuit board 210 is T shaped such that the magnetic encoder 212 can be mounted on the face plate circuit board 210 facing the magnet 211.

The in-line controllers 100, 200 use a miniature magnetic rotation sensor on the circuit board, positioned close to the center line (which is not an absolute requirement). As discussed, while the magnets are two semi-circular ring magnets, mounted to the inner surface of the volume wheel, several magnet types can be used e.g. multi-polarity magnets. The ring or tubular architecture is needed so that the central area can be used for the interconnect (primarily wiring), without making the product bigger. It is noted that the disclosed magnetic encoder or sensor setup can use more than one sensor to increase the resolution if needed.

As explained above, the in-line controller is configured to register the angular position of the magnets. For instance, if the audio device (e.g. the headset) is disconnected and reconnected, the in-line controller can adjust the sound level to a pre-determined safe level, to prevent user harm. A traditional volume control knob does not usually have this feature. The in-line controller may be tuned to be less sensitive (than what the encoder/sensor allows), so that the user can turn the volume from one extreme to the other quickly without much effort.

The above also means that the system is scalable and can be used in other compact user interfaces, for instance in a headset boom arm.

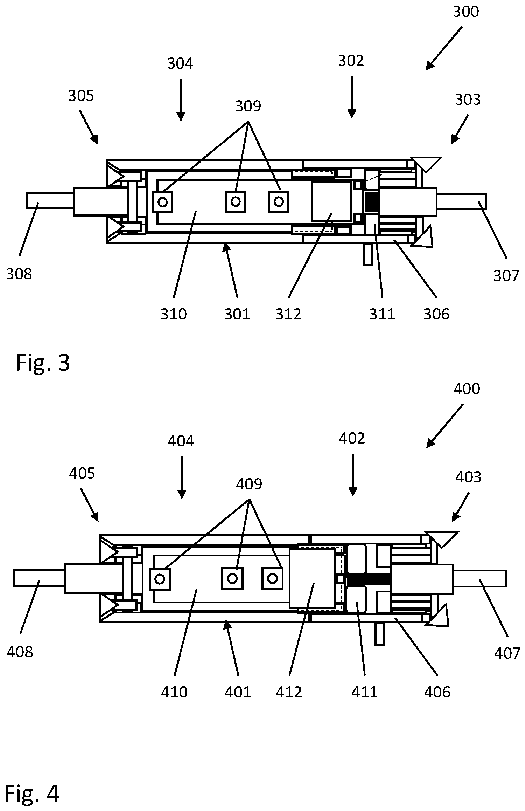

FIG. 3 - 10 now illustrate further embodiments of in-line controllers 300-1000 in schematical top views in longitudinal sections. The in-line controllers 300-1000 employ different alternatives for providing a signal representative of position information of the volume control wheel.

First it shall be highlighted that the in-line controllers 300-1000 are similar to the in-line controllers 100, 200 shown in FIG. 1A-C and 2A-C. Thus, regarding the components and functionality, it can first be referred to the description of FIG. 1A-C, 2A-C. More specifically, all the in-line controllers 300-1000 may also be part of an audio device, such as a headset, and comprise elongated housings 301-1001 having a first ends 303-1003 and a second ends 305-1005, each receiving electrical wirings 307-1007 and 308-1008. The housings 301-1001 comprise a first longitudinal sections 302-1002 extending to the first ends 303-1003 and an adjacent second longitudinal sections 304-1001 extending to the second ends 205-1005. The in-line controllers 300-1000 also comprise circuit boards 310-1010 within the the housings 301-1001. The electrical wirings 307-1007, 308-1008 are connected to the circuit boards 310-1010. The second longitudinal sections 304-1004 of the in-line controllers 300-1000 also comprise multiple user interface elements 309-1009. The circumferential volume control wheels 306-1006 are rotatable relative to the rest of the housings 301-1001 around longitudinal axes of the housings 301-1001. The volume control wheels 306-1006 are configured to be rotated limitlessly by a user of the audio device. For determining a relative position or change in position of the volume control wheels 306-1006, the in-line controllers 306-1006 comprise respective encoders 312-1012, which will be described in more detail below.

In the examples of FIG. 3 and 4, the in-line controllers 300, 400 also comprise respective dipole ring magnets 311, 411 affixed to the inside of the volume control wheels 306, 406. The encoders 312, 412 are also magnetic rotary or angular encoders for encoding the magnetic field of the ring magnets 311, 411 for providing a signal representative of a relative position or change in position of the volume control wheel 30, 406. The magnetic encoders 312, 412 are not positioned within the ring magnets 311, 411, but outside the ring magnets 311, 411 and offset in the direction of the second end 305, 405. This allows to use a larger encoder and/or to utilize a ring magnet with a smaller inner diameter, which may improve detection of the rotation of the ring magnet and allows to utilize the space in the ring magnet for other components, such as running through of the electrical wiring 307, 407.

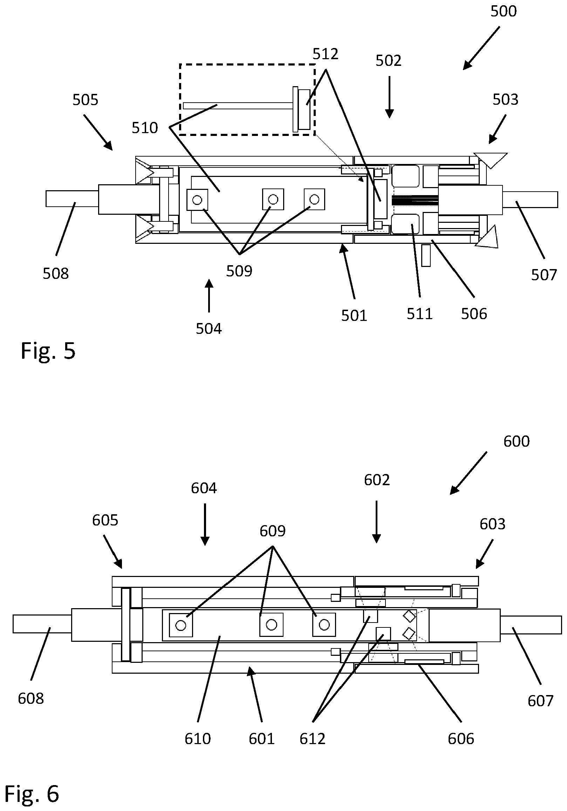

In contrast to the in-line controllers 300, 400, the circuit board 510 is T shaped (see dashed area in FIG. 5 showing a side view of the circuit board 510 together with the encoder 512) such that the magnetic encoder 512 can be mounted on the face plate of the circuit board 510 facing the magnet 511.

Turning to FIG. 6, the in-line controller 600 comprises an encoder 612 which is an optical encoder comprising two sensors for detecting an encoder structure or graphics, which is provided on the inside of the volume control wheel 606. This allows to determine a relative position or change in position of the volume control wheel 606 and setting or changing the volume as described above.

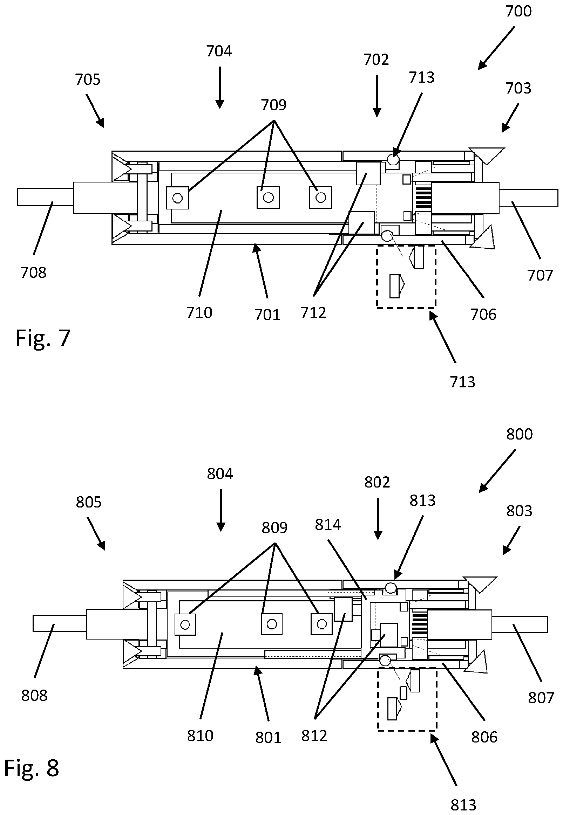

Turning to FIG. 7, the in-line controller 700 comprises an encoder 712, which is a mechanical encoder in the form of two push buttons. The bush buttons are repeatedly activated by a cam structure 713 comprising one or more cams on an inside of the volume control wheel 706 when the volume control wheel 706 is rotated allowing to determine a relative position or change in position of the volume control wheel 706 and setting or changing the volume as described above.

The example shown in FIG. 8 is similar to the one of FIG. 7, i.e. the encoder 812 is a mechanical encoder comprising two push buttons. In this example, the push buttons are also repeatedly activated by a cam structure 813 comprising one or more cams on an inside of the volume control wheel 806 when the volume control wheel 806 is rotated. However, the cam structure 813 moves a linear slider 814, which moves back and forth and thereby activates the push buttons of the encoder 812. This will allow determining a relative position or change in position of the volume control wheel 806 and setting or changing the volume as described above.

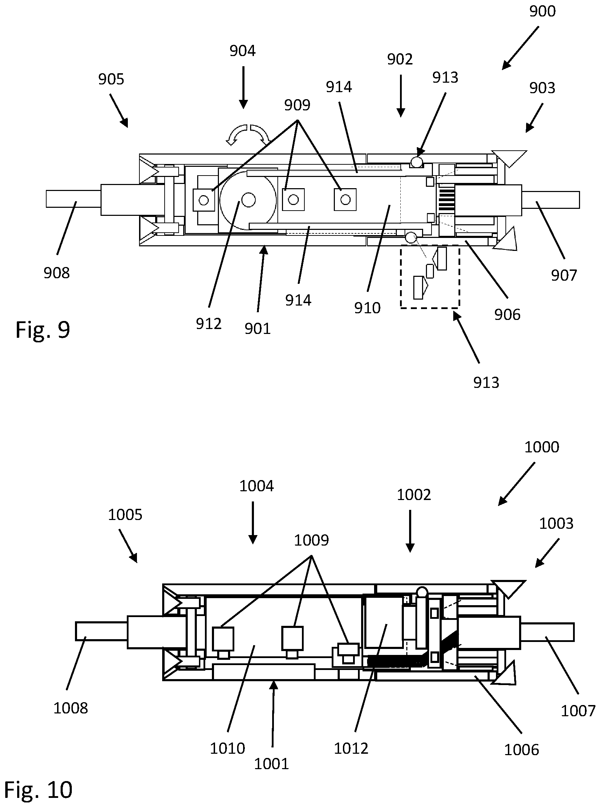

The example shown in FIG. 9 is similar to the one of Fig. 8, i.e. the volume control wheel 906 again comprises a cam structure 913 with one or more cams on an inside of the volume control wheel 906. The encoder 912 is also a mechanical encoder, which is activated by the cam structure 913 via linear sliders 914. However, in this example, the mechanical encoder 912 is a rotary encoder. There are two linear sliders or push/pull arms, which extend from the first section 702 into the second section 904 of the housing 901. The rotary encoder 912 is rotated back and forth when the volume control wheel 906 is rotated via the back and forth movement of the linear sliders 914. Again, this will allow determining a relative position or change in position of the volume control wheel 906 and setting or changing the volume as described above.

The example of the in-line controller 1000 of FIG. 10 also utilizes a mechanical rotary encoder 1012. However, the rotary encoder 1012 is offset the longitudinal axis and in contact with an inside of the volume control wheel 1006. The rotary encoder 1012 is rotated when the volume control wheel 1006 is rotated by a user. Again, this will allow determining a relative position or change in position of the volume control wheel 906 and provide a signal representative of position information of the volume control wheel so that the volume can be set or changed, as described above.

As illustrated above, the examples allow for an compact ergonomic controller in a cost-effective manner. The rotating user interface area in the first section of the housing provides a hollow axle to support the volume control wheel on the outside and at the same time allow the circuit board to guide through cables and to interconnect to the audio device (e.g. headset) or a wired connector or interface. This hollow axle may also a ring shaped lightguide, to inform the user about several states, by using different colours (e.g. RED in a call). The shape of the light indication is not limited to a ring or a single uniform colour.

Generally, it would also be possible to add further components to the disclosed in-line controllers, such as microphones or accelerometers.

It is intended that the structural features of the devices described above, either in the detailed description and/or in the claims, may be combined with steps of the method, when appropriately substituted by a corresponding process.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element, but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method are not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects. Reference to an element in the singular is not intended to mean "one and only one" unless specifically so stated, but rather "one or more." Unless specifically stated otherwise, the term "some" refers to one or more.

Accordingly, the scope should be judged in terms of the claims that follow.

### List of reference numerals

| | |
|---|---|
| audio device | 100, 200, ..., 1000 |
| housing | 101, 201, ..., 1001 |
| first section | 102, 202, ..., 1002 |
| first end | 103, 203, ..., 1003 |
| second section | 104, 204, ..., 1004 |
| second end | 105, 205, ..., 1005 |
| volume control wheel | 106, 206, ..., 1006 |
| wiring | 107, 207, ..., 1007 |
| wiring | 108, 208, ..., 1008 |
| buttons | 109, 209, ..., 1009 |
| PCB | 110, 210, ..., 1010 |
| magnet | 111, 211 ..., 511 |
| encoder | 112, 212, ..., 1012 |
| cam structure | 713, 813, 913 |
| linear slider | 814, 914 |

## Claims

1. An in-line controller (100-1000) for an audio device, the in-line controller comprising:
- an elongated housing (101-1001) having a first end (103-1003) and a second end (105-1005), wherein the first end and the second end receive electrical wiring (107-10007, 108-1008);
wherein the housing comprises a first longitudinal section (102-1002) with a circumferential volume control wheel (106-1006) rotatable relative to the rest of the housing around a longitudinal axis of the housing, wherein the volume control wheel is configured to be rotated limitlessly,
wherein the housing houses an encoder (112-1012) configured for providing a signal representative of position information of the volume control wheel.

2. The in-line controller of claim 1, wherein the encoder is or comprises one or more of:
- a rotary encoder;
- a linear encoder;
- an incremental encoder;
- an absolute encoder;
- an optical encoder;
- a magnetic encoder;
- a mechanical encoder;
- an electro-mechanical encoder; and/or
- a piezoelectric encoder.

3. The in-line controller of claim 1 or 2, configured to
- set a new volume of the audio device based on a current volume of the audio device and the signal representative of position information of the volume control wheel received from the encoder, and/or
- when the audio device is woken up, switched on and/or plugged in, set a current volume of the audio device to a reference volume.

4. The in-line controller of anyone of the preceding claims, wherein a ring magnet (111-511) is fixed to the volume control wheel and wherein the encoder is a magnetic encoder for encoding the magnetic field of the ring magnet for providing the signal representative of position information of the volume control wheel.

5. The in-line controller of claim 4, wherein the ring magnet is one or more of
- magnetized through the circumference of the ring magnet;
- diametrically magnetized;
- a dipole, quadrupole or multipole magnet.

6. The in-line controller of claim 4 or 5, wherein at least a part of electrical wiring received by the first end of the housing runs though the volume control wheel and in particular through the ring magnet.

7. The in-line controller of anyone of claims 4-6, wherein the encoder is located within the ring magnet or outside the ring magnet in the longitudinal direction.

8. The in-line controller of anyone of claims 1-3, wherein the encoder is a rotary encoder offset the longitudinal axis and in contact with an inside of the volume control wheel.

9. The in-line controller of anyone of claims 1-3, wherein the encoder is a mechanical encoder interacting with a cam structure (713, 813, 913) comprising one or more cams on an inside of the volume control wheel.

10. The in-line controller of claim 9, wherein the one or more cams of the cam structure are configured for actuating at least one linear slider (814, 914) configured for interacting with the mechanical encoder.

11. The in-line controller of claim 9 or 10, wherein the mechanical encoder comprises one or more of:
- one or more switches;
- one or more rocker switches;
- one or more push buttons; or
- a rotary encoder.

12. The in-line controller of anyone of claims 1-3, wherein the encoder is or comprises an optical encoder comprising:
- an encoder structure or graphics on the inside of the volume control wheel and
- one or more sensors for detecting said encoder structure or graphics.

13. A wired headset comprising an in-line controller according to anyone of the preceding claims.

14. A method of operating an in-line controller of an audio device, the method comprising:
- setting a current volume of the audio device to a reference volume;
- receiving a signal representative of position information of a volume control wheel of the in-line controller, the volume control wheel being configured to be rotated limitlessly by a user of the audio device;
- setting a new current volume of the audio device based on the current volume and the received signal representative of position information of the volume control wheel.

15. The method of claim 14, wherein the reference volume is or is based on one or more of:
- a predetermined or fixed volume;
- a volume of the audio device at the time of hibernating, switching off or plugging out the audio device.
